# FASCICULE DE BREVET EUROPEEN

(11) **EP 0 945 293 B1**
(45) Date de publication et mention de la délivrance du brevet: **21.05.2003**
(21) Numéro de dépôt: 99400574.2
(22) Date de dépôt: 09.03.1999
(51) Int. Cl.: B60J 3/02

(54) **Pare-soleil notamment de véhicule automobile**
Sonnenblende, insbesondere für Motorfahrzeug
Sun visor in particular for motor vehicle

(30) Priorité: 26.03.1998 FR 9803768
(43) Date de publication de la demande: 29.09.1999
(73) Titulaire: AUTOMOBILES PEUGEOT, 75116 Paris (FR); AUTOMOBILES CITROEN, 92200 Neuilly-sur-Seine (FR)
(72) Inventeur: Dulac, Christel, 92150 Suresnes (FR)
(74) Mandataire: Lanceplaine, Jean-Claude

(56) Documents cités:
- EP-A- 0 332 736
- DE-A- 3 512 807
- US-A- 4 149 749
- US-A- 4 989 910
- US-A- 5 031 952
- US-A- 5 328 227
- PATENT ABSTRACTS OF JAPAN vol. 014, no. 514 (M-1046), 13 novembre 1990 & JP 02 212220 A (NISSAN MOTOR CO LTD), 23 août 1990

## Description

La présente invention a pour objet un pare-soleil notamment pour véhicule automobile.

Les véhicules automobiles sont équipés au niveau de chaque place avant d'un pare-soleil qui est le plus souvent constitué d'une palette pare-soleil montée pivotante autour d'un axe horizontal fixé sur le pavillon du véhicule, entre une position escamotée dans laquelle cette palette pare-soleil est appliquée contre le pavillon et une position active dans laquelle ladite palette pare-soleil est appliquée contre le pare-brise.

Mais, l'architecture interne de certains véhicules automobiles ne permet pas le pivotement du pare-soleil sans gêner l'occupant du siège correspondant.

En effet, le basculement de 180° du pare-soleil exige un débattement suffisamment important pour ne pas interférer avec la tête de l'occupant du siège ce qui est généralement le cas des véhicules dont la ligne du pavillon est très plongeante.

On connaît dans le JP-A-2 212 220 un pare-soleil notamment de véhicule automobile, du type comportant une palette pare-soleil déplaçable par pivotement entre une position escamotée contre le pavillon du véhicule et une position active contre le pare-brise dudit véhicule. Dans ce pare-soleil, la palette pare-soleil est montée pivotante sur le bord avant d'un support déplaçable par coulissement parallèlement à l'axe longitudinal du véhicule entre des organes de guidage fixés sur la face intérieure du pavillon dudit véhicule et comportant des éléments de maintien entre lesdits organes de guidage.

L'invention a pour but d'éviter ces inconvénients en proposant un pare-soleil qui n'interfère pas avec la tête de l'occupant du siège lors de son déploiement, tout en ayant une structure simple et en permettant aux utilisateurs d'obtenir une protection efficace contre les éblouissements dus au soleil.

L'invention a donc pour objet un pare-soleil notamment de véhicule automobile, du type comportant une palette pare-soleil déplaçable par pivotement entre une position escamotée contre le pavillon du véhicule et une position active contre le pare-brise dudit véhicule, la palette pare-soleil étant montée pivotante sur le bord avant d'un support déplaçable par coulissement parallèlement à l'axe longitudinal du véhicule entre des organes de guidage fixés sur la face intérieure du pavillon dudit véhicule et comportant des éléments de maintien entre lesdits organes de guidage, caractérisé en ce que le support est une plaque-support sur laquelle la palette est montée pivotante au moyen d'une tige, les organes de guidage comprenant deux rails rectilignes et parallèles, coopérant avec les éléments de maintien de la plaque-support, ces éléments de maintien comprenant un galet à axe horizontal monté à une extrémité de la tige et coopérant avec l'un desdits rails et deux galets à axe vertical montés sur un bord latéral de la plaque-support et coopérant avec l'autre desdits rails, l'extrémité de la tige opposée à celle comportant le galet à axe horizontal étant engagée à coulissement dans le rail situé en regard.

Selon des modes de réalisation de l'invention :
- la plaque-palette pare-soleil est, dans sa position escamotée, dissimulée entre le pavillon et une garniture interne dudit pavillon,
- la plaque-support et les organes de guidage sont montés entre le pavillon et la garniture interne,
- la palette pare-soleil est montée pivotante sur le bord avant de la plaque-support au moyen d'une tige horizontale reliée par au moins un palier à ladite palette pare-soleil et par au moins un palier à ladite plaque-support,
- chaque rail comporte à son extrémité avant un organe de butée de la tige dans une position correspondant au pivotement de la palette pare-soleil entre sa position escamotée et sa position active,
- le rail situé du côté de l'intérieur du véhicule est plus court que le rail situé du côté de l'extérieur de ce véhicule.

L'invention sera mieux comprise à la lecture de la description qui va suivre, donnée à titre d'exemple et faite en se référant aux dessins annexés, sur lesquels :
- la Fig.1 est une vue schématique en perspective d'un pare-soleil, conforme à l'invention, en position escamotée,
- la Fig. 2 est une vue schématique en perspective du pare-soleil de la Fig. 1, en position déployée.

Sur les figures, on a représenté schématiquement une partie d'un pavillon 1 d'un véhicule automobile qui se prolonge par un pare-brise 2.

La face intérieure du pavillon 1 est recouverte d'une garniture interne 3.

Le véhicule automobile est équipé, au niveau des places avant, d'un pare-soleil conforme à l'invention et qui est désigné par la référence générale 10.

Ainsi que représenté sur les figures, le pare-soleil 10 se compose d'une plaque-support 11 formant un chariot et déplaçable par coulissement parallèlement à l'axe longitudinal du véhicule entre des organes de guidage, respectivement 12 et 13, fixés sur la face intérieure du pavillon 1 dudit véhicule automobile. Cette plaque-support 11 comporte des éléments de maintien 20, 21 et 22 entre lesdits organes de guidage 12 et 13.

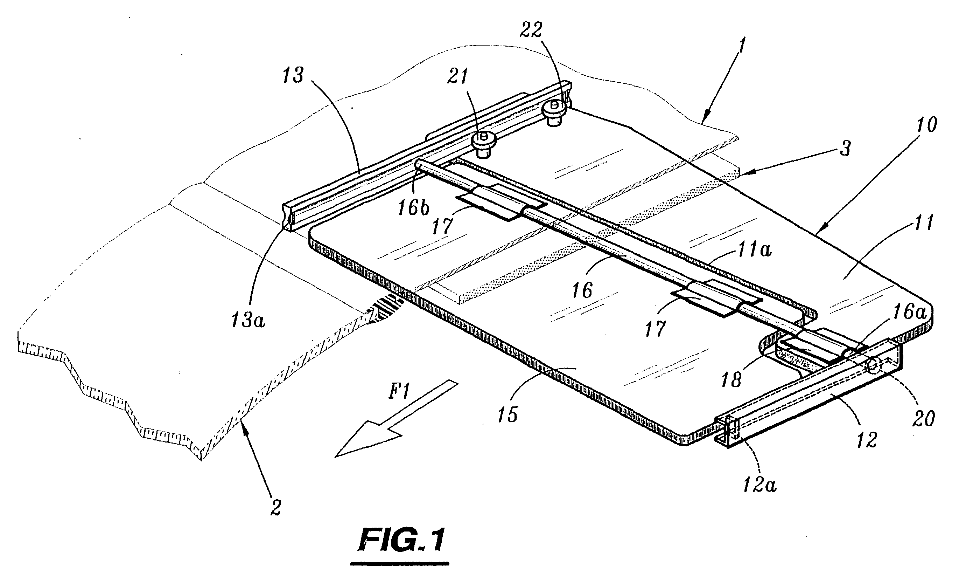

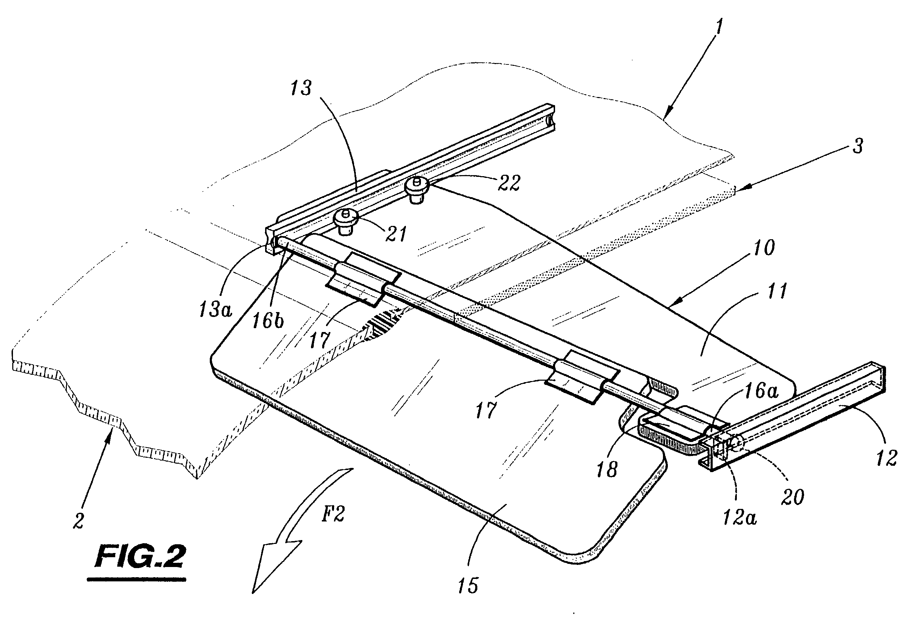

Le pare-soleil 10 se compose également d'une palette pare-soleil 15 déplaçable par pivotement entre une position escamotée contre le pavillon 1 du véhicule (Fig. 1) et une position active contre le pare-brise 2 dudit véhicule (Fig. 2).

A cet effet, la palette pare-soleil 15 est montée pivotante sur le bord avant 11a de la plaque-support 11, comme on le verra ultérieurement.

Ainsi, la palette pare-soleil 15 est, dans sa position escamotée, dissimulée entre le pavillon 1 et la garniture interne 3 et la plaque-support 11 et les organes de guidage 12 et 13 sont montés entre le pavillon 1 et ladite garniture interne 3.

La palette pare-soleil 15 est montée pivotante sur le bord avant 11a de la plaque-support 11 au moyen d'une tige horizontale 16 reliée par au moins un palier 17 à ladite palette pare-soleil 15 et par au moins un palier 18 à ladite plaque-support 11.

Dans l'exemple de réalisation représenté sur les figures, la tige horizontale 16 est reliée, d'une part, à la palette pare-soleil 15 au moyen de deux paliers 17 et d'autre part, à la plaque-support 11 au moyen d'un palier 18.

D'autres modes de liaison permettant le pivotement de la palette pare-soleil 15 par rapport à la plaque-support 11 peuvent être envisagés.

Les organes de guidage sont formés par deux rails, respectivement 12 et 13, rectilignes et parallèles, coopérant avec les éléments de maintien de la plaque-support 11.

Ces éléments de maintien de la plaque-support comprennent un galet 20 à axe horizontal monté à une extrémité 16a de la tige 16 et coopérant avec le rail 12 et par deux galets à axe vertical, respectivement 21 et 22, montés sur un bord latéral de la plaque-support 11 et coopérant avec le rail 13.

Les galets 21 et 22 à axe vertical sont montés sur le bord latéral de la plaque-support 11 opposé à celui supportant l'extrémité 16a de la tige horizontale 16 munie du galet 20 à axe horizontal.

De plus, l'extrémité 16b de la tige 16 opposée à celle 16a comportant le galet 20 à axe horizontal est engagée à coulissement dans le rail 13.

Ainsi, l'ensemble formé par le support 11 et la palette pare-soleil 15 est maintenu entre les rails 12 et 13 par le galet 20 à axe horizontal, les galets 21 et 22 à axe vertical et l'extrémité 16b de la tige 16.

Le montage de la palette pare-soleil 15 sur un support 11 en forme de plaque et la disposition et l'orientation des galets 20, 21 et 22, permettent d'obtenir une translation de cette palette pare-soleil sans gauchissement et sans basculement et d'éviter tout risque de coincement lors du déploiement du pare-soleil.

Le rail 12 comporte, à son extrémité avant, un organe de butée 12a destiné à coopérer avec le galet 20 à axe horizontal et le rail 13 comporte, à son extrémité avant, un organe de butée 13a destiné à coopérer avec l'extrémité 16b de la tige 16.

La position de l'organe de butée 12a dans le rail 12 et de l'organe de butée 13a dans le rail 13 correspond à la position de pivotement de la palette pare-soleil 15 entre sa position escamotée et sa position active.

Dans l'exemple de réalisation représenté sur les figures, le rail 12 situé par exemple du côté de l'intérieur du véhicule est plus court que le rail 13 situé du côté de l'extérieur de ce véhicule de façon à ne pas gêner l'installation d'un éventuel toit ouvrant.

Le bord avant de la palette pare-soleil 15 peut être équipé d'un organe de préhension, non représenté, solidaire ou venu de forme avec ladite palette.

En position de non utilisation, comme représentée à la Fig.1, la palette pare-soleil 15 est appliquée contre la face interne du pavillon 1 et sa majeur partie est dissimulée par la garniture interne 3.

Pour déployer le pare-soleil 10 afin d'obtenir une protection contre les éblouissements dus au soleil, il suffit à l'utilisateur d'exercer une traction sur le bord avant de la palette pare-soleil 15, comme indiqué par la flèche F1 sur la Fig.1.

Sous l'effet de cette traction, la plaque-support 11 coulisse entre les rails 12 et 13 par l'intermédiaire des galets 20, 21 et 22 et la palette pare-soleil 15 sort progressivement de la garniture interne 3 du pavillon 1.

En fin de mouvement, le galet 20 à axe horizontal et l'extrémité 16b de la tige 16 entrent en contact avec les organes de butée, respectivement 12a et 13a, ménagés dans les rails 12 et 13 et la palette pare-soleil 15 peut être mise en rotation autour de la tige horizontale 16 comme indiquée par la flèche F2 sur la Fig. 2, pour se placer le long du pare-brise 2 selon la position recherchée par l'utilisateur.

Pour ramener le pare-soleil 10 dans sa position escamotée, il suffit à l'utilisateur de remettre la palette pare-soleil 15 en position horizontale, puis d'exercer une poussée sur ladite palette 15 pour faire coulisser la plaque-support 11 en sens inverse.

Le pare-soleil 10 peut être équipé d'un système de motorisation, comme par exemple un moteur électrique.

Le pare-soleil selon l'invention présente l'avantage, lors de son pivotement entre la position escamotée contre le pavillon du véhicule, et la position active contre le pare-brise de ce véhicule de ne pas interférer avec la tête de l'occupant du siège correspondant ce qui convient particulièrement aux véhicules automobiles dont la ligne du pavillon est très plongeante.

De plus, le pare-soleil selon l'invention présente l'avantage de pouvoir être dissimulé dans la garniture du pavillon du véhicule lorsqu'il n'est pas utilisé.

## Revendications

1. Pare-soleil notamment de véhicule automobile, du type comportant une palette pare-soleil (15) déplaçable par pivotement entre une position escamotée contre le pavillon (1) du véhicule et une position active contre le pare-brise (2) dudit véhicule, la palette pare-soleil (15) étant montée pivotante sur le bord avant d'un support (11) déplaçable par coulissement parallèlement à l'axe longitudinal du véhicule entre des organes de guidage (12, 13) fixés sur la face intérieure du pavillon (1) dudit véhicule et comportant des éléments de maintien (20, 21, 22) entre lesdits organes de guidage (12, 13), **caractérisé en ce que** le support (11) est une plaque-support (11) sur laquelle la palette est montée pivotante au moyen d'une tige (16), les organes de guidage comprenant deux rails (12, 13) rectilignes et parallèles, coopérant avec les éléments de maintien (20, 21, 22) de la plaque-support (11), ces éléments de maintien (20, 21, 22) comprenant un galet (20) à axe horizontal monté à une extrémité (16a) de la tige (16) et coopérant avec l'un (12) desdits rails et deux galets (21, 22) à axe vertical montés sur un bord latéral de la plaque-support (11) et coopérant avec l'autre (13) desdits rails, l'extrémité (16b) de la tige (16) opposée à celle (16a) comportant le galet (20)à axe horizontal étant engagée à coulissement dans le rail (13) situé en regard.

2. Pare-soleil selon la revendication 1, **caractérisé en ce que** la palette pare-soleil (15) est, dans sa position escamotée, dissimulée entre le pavillon (1) et une garniture interne (3) dudit pavillon.

3. Pare-soleil selon la revendication 2, **caractérisé en ce que** la plaque-support (11) et les organes de guidage (12, 13) sont montés entre le pavillon (1) et la garniture interne (3).

4. Pare-soleil selon la revendication 1, **caractérisé en ce que** la palette pare-soleil (15) est montée pivotante sur le bord avant de la plaque-support (11) au moyen d'une tige horizontale (16) reliée par au moins un palier (17) à ladite palette pare-soleil (15) et par au moins un palier (18) à ladite plaque-support (11).

5. Pare-soleil selon la revendication 1, **caractérisé en ce que** chaque rail (12, 13) comporte, à son extrémité avant, un organe de butée (12a, 13a) de la tige (16) dans une position correspondant au pivotement de la palette pare-soleil (15) entre sa position escamotée et sa position active.

6. Pare-soleil selon la revendication 1, **caractérisé en ce que** le rail (12) situé du côté de l'intérieur du véhicule est plus court que le rail (13) situé du côté de l'extérieur de ce véhicule.

## Claims

1. Sun visor, especially one for motor vehicles, having a sun-visor pallet (15) which is adapted to be moved by pivoting it between a retracted position against the headliner (1) of the vehicle and an operational position against the windscreen (2) of said vehicle, the sun-visor pallet (15) being pivotably mounted on the front edge of a support (11) which is adapted to be moved by sliding it, parallel to the vehicle's longitudinal axis, between guide members (12, 13) fastened onto the inner face of the headliner (1) of said vehicle and having retaining elements (20, 21, 22) between said guide members (12, 13), **characterised in that** the support (11) is a supporting plate (11) upon which the pallet is pivotably mounted by means of a rod (16), the guide members comprising two rectilinear parallel rails (12, 13) which cooperate with the retaining elements (20, 21, 22) of the supporting plate (11), said retaining elements (20, 21, 22) comprising a roller (20) with a horizontal axis which is mounted on one end (16a) of the rod (16) and cooperates with one (12) of said rails and two rollers (21, 22) with vertical axes which are mounted on a lateral edge of the supporting plate (11) and cooperate with the other of said rails, the end (16b) of the rod (16) situated opposite the end (16a) having the horizontal axis roller (20) being slidingly engaged in the rail (13) facing it.

2. Sun visor according to claim 1, **characterised in that** in its retracted position the sun-visor pallet (15) is concealed between the headliner (1) and an internal fitting (3) of said headliner.

3. Sun visor according to claim 2, **characterised in that** the supporting plate (11) and the guide members (12, 13) are mounted between the headliner (1) and the internal fitting (3).

4. Sun visor according to claim 1, **characterised in that** the sun-visor pallet (15) is pivotably mounted on the front edge of the supporting plate (11) by means of a horizontal rod (16) connected by at least one bearing (17) to said sun-visor pallet (15) and by at least one bearing (18) to said supporting plate (11).

5. Sun visor according to claim 1, **characterised in that** at its front end each rail (12, 13) has a stop member (12a, 13a) for the rod (16) in a position corresponding to the pivoting of the sun-visor pallet (15) between its retracted position and its operational position.

6. Sun visor according to claim 1, **characterised in that** the rail (12) which is situated further into the vehicle is shorter than the rail (13) situated towards the exterior of said vehicle.

## Patentansprüche

1. Sonnenblende, insbesondere für Kraftfahrzeug, des Typs, der einen Sonnenblendenflügel (15) enthält, der durch Schwenken zwischen einer gegen das Fahrzeugdach (1) hochgeklappten Stellung und einer aktiven Stellung gegen die Windschutzscheibe (2) des Fahrzeugs beweglich ist, wobei der Sonnenblendenflügel (15) am vorderen Rand eines Trägers (11) angelenkt ist, der durch Gleiten parallel zur Längsachse des Fahrzeugs zwischen an der Innenfläche des Fahrzeugdachs (1) befestigten Führungsorganen (12, 13) verschiebbar ist und Halteelemente (20, 21, 22) zwischen diesen Führungsorganen (12, 13) umfaßt, **dadurch gekennzeichnet, daß** der Träger (11) eine Tragplatte (11) ist, an der der Flügel mittels eines Stifts (16) angelenkt ist, wobei die Führungsorgane zwei geradlinige und parallele Schienen (12, 13) aufweisen, die mit den Halteelementen (20, 21, 22) der Tragplatte (11) zusammenwirken, wobei diese Halteelemente (20, 21, 22) eine Rolle (20) mit horizontaler Achse, die an einem Ende (16a) des Stifts (16) angebracht ist und mit einer (12) der Schienen zusammenwirkt, und zwei Rollen (21, 22) mit vertikaler Achse, die an einer Seitenkante der Tragplatte (11) angebracht sind und mit der anderen (13) der Schienen zusammenwirken, umfassen, wobei das Ende (16b) des Stifts (16), das demjenigen (16a) gegenüberliegt, das die Rolle (20) mit horizontaler Achse aufweist, in der gegenüber befindlichen Schiene (13) in Gleiteingriff ist.

2. Sonnenblende nach Anspruch 1, **dadurch gekennzeichnet, daß** der Sonnenblendenflügel (15) in seiner hochgeklappten Stellung zwischen dem Dach (1) und einer Innenverkleidung (3) des Dachs verborgen ist.

3. Sonnenblende nach Anspruch 2, **dadurch gekennzeichnet, daß** die Tragplatte (11) und die Führungsorgane (12, 13) zwischen dem Dach (1) und der Innenverkleidung (3) angebracht sind.

4. Sonnenblende nach Anspruch 1, **dadurch gekennzeichnet, daß** der Sonnenblendenflügel (15) am vorderen Rand der Tragplatte (11) mittels eines horizontalen Stifts (16) schwenkbar angebracht ist, der durch wenigstens ein Lager (17) mit dem Sonnenblendenflügel (15) verbunden ist und durch wenigstens ein Lager (18) mit der Tragplatte (11) verbunden ist.

5. Sonnenblende nach Anspruch 1, **dadurch gekennzeichnet, daß** jede Schiene (12, 13) an ihrem vorderen Ende ein Anschlagorgan (12a, 13a) für den Stift (16) in einer Position, die der Schwenkung des Sonnenblendenflügels (15) zwischen seiner hochgeklappten Stellung und seiner aktiven Stellung entspricht, umfaßt.

6. Sonnenblende nach Anspruch 1, **dadurch gekennzeichnet, daß** die Schiene (12), die sich innerhalb des Fahrzeugs befindet, kürzer ist als die Schiene (13), die sich außerhalb des Fahrzeugs befindet.
